# FASCICULE DE BREVET EUROPEEN

(11) **EP 0 850 878 B1**
(45) Date de publication et mention de la délivrance du brevet: **19.09.2001**
(21) Numéro de dépôt: 97403033.0
(22) Date de dépôt: 12.12.1997
(51) Int. Cl.: C01C 1/18, C06B 31/28, B01J 2/12

(54) **Procédé et installation pour la fabrication de nitrate d'ammoniaque poreux**
Verfahren und Anlage zur Herstellung von porösem Ammoniumnitrat
Process and installation for the production of porous ammonium nitrate

(30) Priorité: 31.12.1996 FR 9616297
(43) Date de publication de la demande: 01.07.1998
(73) Titulaire: KALTENBACH - THURING S.A., 60000 Beauvais (FR)
(72) Inventeur: Vogel, Edmond, 92420 Vaucresson (FR); Monsterleet, Jacques, 78160 Marly le Roi (FR)
(74) Mandataire: Moncheny, Michel

(56) Documents cités:
- EP-A- 0 068 574
- EP-A- 0 216 653
- EP-A- 0 569 163
- FR-A- 2 451 351
- GB-A- 894 773
- GB-A- 990 487
- US-A- 2 416 615
- CHEMICAL ABSTRACTS, vol. 90, no. 2, 8 janvier 1979 Columbus, Ohio, US; abstract no. 8527, SAEZ SAIZ & AL.: "Drying of porous ammonium nitrate explosives in "prilling" plants using a fluidized bed" XP002040374 & ES 456 079 A 1 février 1978

## Description

La présente invention concerne un procédé et une installation pour la fabrication de nitrate poreux.

Le nitrate d'ammoniaque est bien connu pour ses qualités explosives. La possibilité de le conditionner sous forme de petites billes de diamètre habituellement compris entre 1 et 3 mm le rend très facile d'emploi en tant qu'explosif civil, utilisé dans les carrières, les mines, etc...

Il est habituellement mélangé avec du fioul dans des proportions de 94 % de nitrate d'ammoniaque pour 6 % de fioul. La présence de l'hydrocarbure a pour effet de sensibiliser le nitrate, c'est-à-dire de lui permettre de détonner plus facilement par effet de sympathie avec un explosif d'initiation. Pour permettre l'absorption d'hydrocarbure par les granulés de nitrate, on rend ces derniers poreux, la technique habituelle pour fabriquer de tels granulés consistant à pulvériser une solution de nitrate d'ammoniaque au sommet d'une tour de granulation puis à récupérer à la partie inférieure de la tour les granulés cristallisés et à les sécher, la porosité souhaitée étant obtenue lors du séchage par élimination de l'eau contenue dans les granulés.

Un tel procédé est coûteux, compte tenu notamment de l'investissement élevé que représente la construction d'une tour de granulation.

C'est pourquoi on a envisagé de fabriquer des granulés par compactage de fines de nitrate d'ammoniaque mais la porosité obtenue est faible et le compactage du nitrate d'ammoniaque est une opération difficile, voir dangereuse.

On a également envisagé de faire subir au nitrate d'ammoniaque de qualité dite agricole, donc dense, des cycles thermiques autour du point de transition de 32°, de façon à créer par des dilatations et des rétractions successives, des fissures permettant d'obtenir une certaine porosité. Cette technique s'est toutefois révélée sans intérêt car les granulés obtenus étaient fragiles et la forme des pores ne permettait pas de conserver le fioul après son absorption.

L'invention se propose par conséquent de fournir un procédé et une installation de fabrication de granulés poreux de nitrate d'ammonium, ces granulés devant être de bonne qualité vis-à-vis de l'application envisagée, c'est-à-dire devant présenter une porosité et une résistance suffisantes, ce procédé devant de plus ne pas utiliser de tour de granulation, afin de diminuer les investissements et les coûts de fabrication.

A cet effet, l'invention a pour objet un procédé de fabrication de granulés de nitrate d'ammoniaque poreux, caractérisé en ce qu'on introduit dans un granulateur à tambour rotatif et à lit fluidisé des amorces de nitrate d'ammoniaque solide, on pulvérise sur ces amorces une solution de nitrate d'ammoniaque ayant une concentration comprise entre 94 et 98% et une température comprise entre 135 et 170°C, on élimine une partie de l'eau contenue dans la solution au cours de la granulation par les actions conjuguées de la chaleur de cristallisation du nitrate et d'un flux d'air soufflé sous le lit, le produit sortant du granulateur (10) contenant entre 0,5 et 1,5 % d'eau et sa température étant comprise entre 35 et 55° C, on élimine l'eau restante au cours d'une opération de séchage à la sortie du granulateur et l'on refroidit le produit ainsi obtenu.

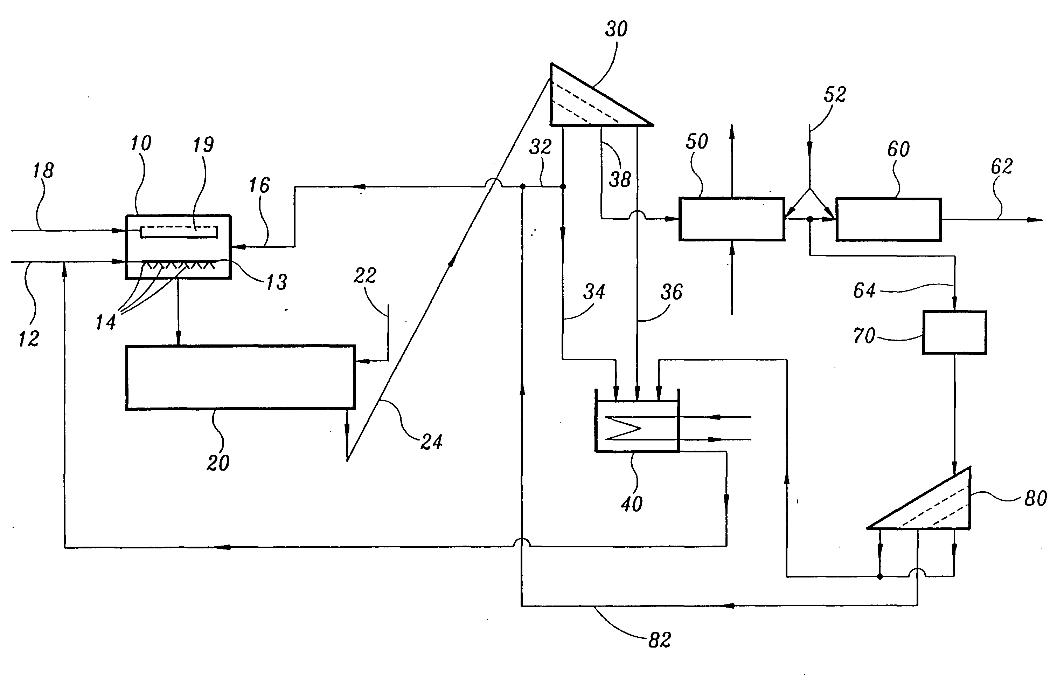

L'invention va être décrite plus en détail ci-dessous en se référant au dessin annexé, dont la figure unique représente un schéma d'une installation selon l'invention.

L'opération de granulation du nitrate d'ammoniaque s'effectue dans un granulateur 10 du type à tambour rotatif et lit fluidisé, du type décrit par exemple dans le document FR-A-85 12 082, qui est habituellement utilisé pour fabriquer des granulés denses de nitrate d'amoniaque, à partir de sels fondus à concentration élevée (99,5 à 99,9 %).

Dans le cas présent, ce granulateur reçoit, d'une part en 12, une solution de nitrate d'ammoniaque pulvérisée au moyen d'une rampe 13 dotée de busettes 14 et, d'autre part, du nitrate à l'état solide, par un conduit 16. Il reçoit également en 18 de l'air de fluidisation éventuellement conditionné en fonction des conditions climatiques environnantes, alimentant le lit fluidisé 19.

La solution de nitrate introduite dans le granulateur peut avoir les caractéristiques suivantes :
- concentration de 94 à 98 %,
- température : 135 à 170° C et de préférence de 140 à 160° C.

Elle peut contenir des additifs porosants parmi lesquels par exemple des agents tensio-actifs tels que des sels d'alcool sulfate ou des naphtalènes sulfonates de soude. Ces additifs porosants peuvent être prévus dans des proportions comprises entre 100 et 2000 ppm et de préférence entre 400 et 700 ppm.

La solution peut aussi contenir des additifs durcisseurs et notamment des sels, tels que le sulfate d'ammoniaque, le nitrate de magnésium, le sulfate d'alumine ou d'autres sels métalliques, dans des proportions comprises par exemple entre 0,1 et 2 %.

Les produits solides introduits dans le granulateur sont des produits fins recyclés et des amorces qui peuvent être constituées soit par des produits gros broyés, soit par du produit marchand broyé. La taille de ces amorces est choisie en fonction de la taille du produit fini. A titre d'exemple, pour un produit fini de diamètre moyen de 3 mm, on s'efforcera d'introduire des amorces de diamètre moyen de 0,8 mm. Du fait du bris naturel des produits manutentionnés et de la constitution naturelle d'amorces résultant de ce bris, la quantité d'amorces à générer dans le broyeur peut ne pas dépasser 4 % de la capacité totale.

Dans le granulateur, comme connu en soi, la pulvérisation de solution de nitrate se fait à l'aide de la rampe 13 dont les busettes sont dirigées vers le rideau de produit tombant du lit fluidisé 19. La rampe peut être placée indiféremment sous le rideau ou au-dessus de ce dernier. La pression de pulvérisation dépend de la nature des pulvérisateurs mais doit permettre d'obtenir des gouttelettes dont la taille est de préférence inférieure à 300 µ.

Le débit d'air soufflé, sa température et le temps de séjour du produit dans le granulateur sont déterminés de façon que l'humidité du produit sortant de ce granulateur soit comprise entre 0,5 et 1,5 % et sa température entre 35 et 55°C.

Le produit sortant du granulateur est transféré dans un séchoir 20 dans lequel l'humidité du produit est ramenée à moins de 0,2 % d'eau. A cet effet, on souffle dans ce séchoir de l'air chaud 22 à une température comprise entre 110 et 160°C et de préférence entre 120 et 140°C.

Le produit sort du séchoir en 24 à une température comprise entre 40 et 80°C et de préférence entre 50 et 60°C, cette température étant en tout état de cause inférieure à la température de transition du produit, qui est de 84,2°C et qui correspond au passage d'une structure tétragonale du nitrate à une structure rhomboédrique avec variation du volume spécifique du produit.

On veille également, au cours de ces phases de granulation et de séchage, à ce que le produit ne franchisse pas vers le bas un autre point de transition, situé à 32°C, pour lequel se produit une nouvelle variation du volume spécifique du nitrate.

Le produit sortant du séchoir 20 est transféré à un crible 30 où s'effectue la séparation des produits hors spécification (les fins et les gros). On recycle vers le granulateur au moins une partie 32 des produits fins, en fonction du taux de recyclage souhaité, les produits fins en excédent 34 et les gros 36 étant refondus dans un fondoir 40 pour être remélangée avec la solution concentrée entrant dans le granulateur.

Les granulés 38 présentant les dimensions correctes sortant du crible 30 sont introduits dans un refroidisseur 50, de tout type convenable, par exemple à lit fluidisé, et après refroidissement, ces granulés peuvent être revêtus d'un produit anti-massant 52, dans un enrobeur 60, avant d'être envoyés (en 62) vers une installation de stockage. Afin d'éviter de franchir vers le bas le point de transition à 32° C, la température à la sortie du refroidisseur et dans l'installation de stockage peut être maintenue supérieure à 35° par exemple.

Une partie 64 du produit marchand peut être transmise à un broyeur 70 puis à un crible 80, de façon à fournir les amorces 82 à la dimension convenable, qui sont introduites dans le granulateur. Les produits fins et gros sortant de ce crible sont refondus et introduits dans la solution de nitrate.

Les conditions dans lesquelles sont effectués la granulation et le séchage, selon le procédé décrit ci-dessus, sont telles que les granulés obtenus présentent une porosité satisfaisante et sont particulièrement résistants. Ce résultat est du notamment aux conditions particulières dans lesquelles s'effectue dans le granulateur le cycle de cristallisation et de séchage provoquant le grossissement des granulés par couches successives et l'élimination de l'eau lors de la formation de chacune des couches. La porosité ainsi obtenue est: régulière et répartie dans une partie importante de l'épaisseur de ces granulés.

De plus, le procédé limite à une seule fois, lors de la cristallisation dans le granulateur, le passage par le point de transition supérieur situé aux environs de 84,2°C, le point de transition inférieur situé aux environs de 32°C n'étant quant à lui franchi au maximum qu'une fois lors du refroidissement du produit. Il est en effet important de passer le moins de fois possible par ces points de transition car les variations de volume dues au changement de structure cristalline du nitrate créent des fissures au sein du granulé, qui le fragilisent et procurent une porosité du type crevasse qui ne permet pas de retenir le fioul d'une façon convenable.

Un exemple concret de mise en oeuvre de ce procédé peut être le suivant :

On introduit dans le granulateur une solution de nitrate à 95 % sous un débit de 6762 kg/h, à une température de 150° C, avec 4,5 kg/h d'un additif tensio- actif du commerce à base de naphtalène sulfonate, 44.579 kg/h d'air à 27° C et 6.627 kg/h de nitrate granulé recyclé, à 60° C, ayant une teneur en eau de l'ordre de 0,1 % et contenant des particules solides constituant des amorces, ayant une granulométrie comprise entre 0,6 et 1 mm.

On obtient en sortie du granulateur 13044 kg/h de nitrate granulé ayant un taux d'humidité de 1 %, à une température de 50° C, qui sont introduits dans le séchoir, avec de l'air à 120° C, sous un débit de 15846 kg/h.

On obtient après séchage 12.727 kg/h de nitrate granulé à 60° C contenant environ 0,1 % d'eau.

Après criblage, refonte des produits gros et fin et refroidissement à 28° C, on obtient 4.200 kg/h de nitrate granulé poreux très résistant ayant une densité apparente de 0,67, une granulométrie de 1 à 2,8 mm pour 98 % du produit et une capacité d'absorption de fioul de 10 %.

## Revendications

1. Procédé de fabrication de granulés de nitrate d'ammoniaque poreux, **caractérisé en ce qu'**on introduit dans un granulateur à tambour rotatif et à lit fluidisé des amorces de nitrate d'ammoniaque solide, on pulvérise sur ces amorces une solution de nitrate d'ammoniaque ayant une concentration comprise entre 94 et 98% et une température comprise entre 135 et 170°C, on élimine une partie de l'eau contenue dans la solution au cours de la granulation par les actions conjuguées de la chaleur de cristallisation du nitrate et d'un flux d'air soufflé sous le lit, le produit sortant du granulateur (10) contenant entre 0,5 et 1,5 % d'eau et sa température étant comprise entre 35 et 55° C, on élimine l'eau restante au cours d'une opération de séchage à la sortie du granulateur et l'on refroidit le produit ainsi obtenu.

2. Procédé suivant la revendication 1, **caractérisé en ce que** la solution de nitrate d'ammoniaque est introduite à une température comprise entre 140 et 160° C.

3. Procédé suivant l'une quelconque des revendications 1 et 2, **caractérisé en ce que** le produit sortant du séchoir (20) contient moins de 0,2% d'eau et sa température est comprise entre 40 et 80° C.

4. Procédé suivant l'une quelconque des revendications 1 à 4, **caractérisé en ce qu'**au cours de l'ensemble des opérations de granulation, séchage et refroidissement chacun des points de transition situés à environ 84° C et environ 32° C n'est franchi au maximum qu'une seule fois.

## Patentansprüche

1. Verfahren zur Herstellung von Granula von porösem Ammoniumnitrat, **dadurch gekennzeichnet, dass** in einen Drehtrommelgranulator mit Fließbett Bruchstücke von festem Ammoniumnitrat eingebracht werden, über diese Bruchstücke eine Ammoniumnitratlösung versprüht wird, die eine Konzentration von 94 bis 98% und eine Temperatur von 135 bis 170°C aufweist, ein Teil des in der Lösung enthaltenen Wassers während der Granulation, die durch gemeinsame Einwirkung der Kristallisationswärme des Nitrats und eines unter dem Bett durchgeblasenen Luftstroms erfolgt, entfernt wird, wobei das den Granulator (10) verlassende Produkt 0,5 bis 1,5% Wasser umfasst und eine Temperatur von 35 bis 55°C aufweist, das restliche Wasser während eines Trocknungsvorgangs am Ausgang des Granulators entfernt wird und das so erhaltene Produkt abgekühlt wird.

2. Verfahren nach Anspruch 1, **dadurch gekennzeichnet, dass** die Ammoniumnitratlösung mit einer Temperatur von 140 bis 160°C eingebracht wird.

3. Verfahren nach einem der Ansprüche 1 und 2, **dadurch gekennzeichnet, dass** das aus dem Trockner (20) entlassene Produkt weniger als 0,2% Wasser umfasst und eine Temperatur von 40 bis 80°C aufweist.

4. Verfahren nach einem der Ansprüche 1 bis 4, **dadurch gekennzeichnet, dass** während der Gruppe der Vorgänge Granulation, Trocknen und Abkühlen alle Übergangspunkte, die sich bei etwa 84°C und etwa 32°C befinden, maximal einmal überschritten werden.

## Claims

1. Process for the production of granules of porous ammonium nitrate, **characterised in that** there are introduced into a rotating drum granulator and a fluidised bed starting materials of solid ammonium nitrate, onto these starting materials there is sprayed a solution of ammonium nitrate having a concentration lying between 94 and 98% and a temperature lying between 135 and 170°C, a portion of the water contained in the solution is eliminated in the course of the granulation by the combined actions of the heat of crystallisation of the nitrate and a flow of air blown in under the bed, the product emerging from the granulator (10) containing between 0.5 and 1.5% of water and its temperature lying between 35 and 55°C, the remaining water is eliminated in the course of a drying operation at the outlet of the granulator and the product thus obtained is cooled.

2. Process according to claim 1, **characterised in that** the ammonium nitrate solution is introduced at a temperature lying between 140 and 160°C.

3. Process according to any one of claims 1 and 2, **characterised in that** the product emerging from the dryer (20) contains less than 0.2% water and its temperature lies between 40 and 80°C.

4. Process according to any one of claims 1 to 4, **characterised in that** in the course of the combination of the operations of granulation, drying and cooling each of the transition points situated at around 84°C and 32°C is not traversed at most more than once.
